# EUROPEAN PATENT SPECIFICATION

(11) **EP 1 411 398 B1**
(45) Date of publication and mention of the grant of the patent: **11.12.2013**
(21) Application number: 03022962.9
(22) Date of filing: 09.10.2003
(51) Int. Cl.: G03H 1/08, B42D 15/00, G03H 1/02

(54) **Micro-patterned three-dimensional hologram and document provided with a micro-patterned three-dimensional hologram**
Dreidimensionales Hologramm mit Mikromustern und ein Dokument dieses enthaltend
Hologramme tridimensionel comportant des micro-motifs et document le comprenant

(30) Priority: 16.10.2002 JP 2002301296
(43) Date of publication of application: 21.04.2004
(73) Proprietor: DAI NIPPON PRINTING CO., LTD., Tokyo 162-0062 (JP)
(72) Inventor: Kitamura, Mitsuru, Tokyo 162-0062 (JP)
(74) Representative: Vossius & Partner

(56) References cited:
- DE-A1- 19 915 943
- GB-A- 2 350 961
- HAMANO T ET AL: "COMPUTER-GENERATED HOLOGRAMS FOR RECONSTRUCTING MULTI 3-D IMAGES BY SPACE-DIVISION RECORDING METHOD" PROCEEDINGS OF THE SPIE - THE INTERNATIONAL SOCIETY FOR OPTICAL ENGINEERING, SPIE, PO BOX 10 BELLINGHAM WA 98227-0010 USA, vol. 3956, 24 January 2000 (2000-01-24), pages 23-32, XP009007446 ISSN: 0277-786X
- CAMERON C D ET AL: "LARGE SCALE COMPUTER GENERATED ABSORPTION HOLOGRAMS OF 3D OBJECTS - PART I, THEORETICAL BACKGROUND AND VISUAL CONCEPTS" PROCEEDINGS OF THE SPIE - THE INTERNATIONAL SOCIETY FOR OPTICAL ENGINEERING, SPIE, PO BOX 10 BELLINGHAM WA 98227-0010 USA, vol. 3637, 25 January 1999 (1999-01-25), pages 33-44, XP008000302 ISSN: 0277-786X

## Description

### BACKGROUND OF THE INVENTION

The present invention relates to a three-dimensional micropattern, and in particular, a three-dimensional micropattern with enhanced counterfeit deterrent effect using hologram.

Conventionally, micro-letters created by printing have been used in the cash vouchers such as securities and banknotes for counterfeit deterrence. However, due to the improvement of color copying machines in resolution and color reproducibility, counterfeit of these cash vouchers are increasing.

In addition, micro-letters using diffraction gratings have also been practically used for imparting enhanced counterfeit deterrent effect. A security feature using the diffraction grating is often utilized as high level counterfeit deterrence measures because of its high resolution, although it is two-dimensional image. However, these micro-letters using the diffraction grating which have been regarded as high level counterfeit deterrence technique are nowadays increasingly counterfeited, because the patterns recorded in it have come to be detected by microscopic observation, and because of the spread of the diffraction grating image forming devices using laser two-beam interference.

On the other hand, computer generated holograms (CGHs) have been known. There are generally two processes in the CGH producing technique, of which one is a process in which the object surface is replaced with a set of point light sources or linear light sources, known in the non-patent reference 1, 2, and others. The other is the use of the holographic stereogram, known in the patent reference 1 and the non-patent reference 3, and others.

The former process of the two, namely replacing the object surface with a set of point light sources or linear light sources, will be described here as a representative process.

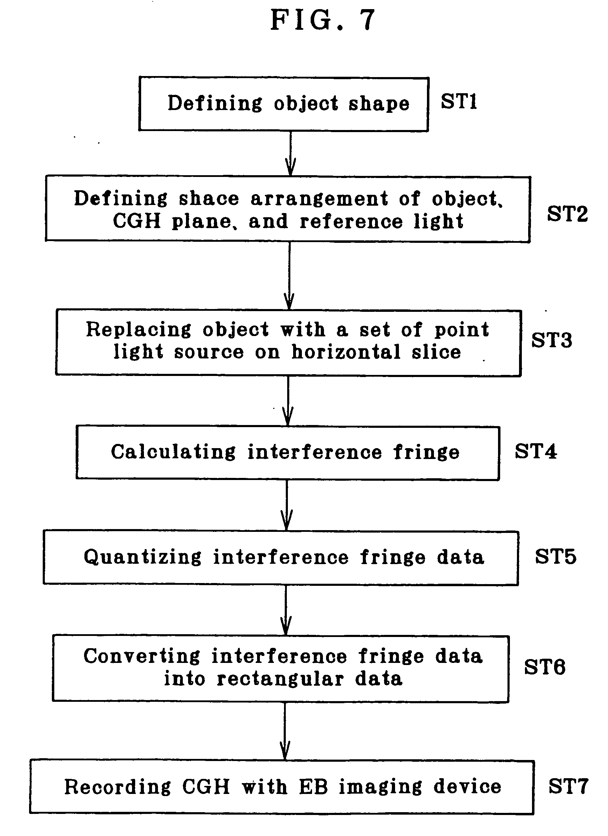

As an example of CGHs, a binary hologram obtained by recording the intensity distribution of interference fringe, of which reconstructed image has parallax only in horizontal direction, and which is to be observed with white light from above, will be described in outline. Referring to FIG. 7, the shape of the object to be imaged in CGH is defined at step ST1. Then at step ST2, the space arrangements of the object, CGH plane, and reference light are defined. Then at step ST3, the object is divided in the vertical direction with horizontal slices, followed by replacement of the sliced surface with a set of point light sources (linear light sources). Then at step ST4, on the basis of these space arrangements, the intensities of the interference fringe between the light arriving from the point light sources (linear light sources) constituting the object and the reference light are calculated for each sample point defined on the CGH plane, thereby obtaining the interference fringe data. Then at step ST5, the obtained interference fringe data are quantized. After that, at step ST6, the data are converted into a rectangular data for EB imaging, which are recorded at step ST7 on a medium by means of an EB imaging device, thus finally producing CGH.

In this calculation of the interference fringe, the hidden surface removal process is performed. The hidden surface removal process is a process of making a part, which is hidden by other object in front of it, invisible when an object is observed from a certain viewpoint, whereby the information of overlapping of objects is added to retina image, thus exhibiting a three dimensional effect. In the CGH recording, the hidden surface removal process is performed according to the following procedure.

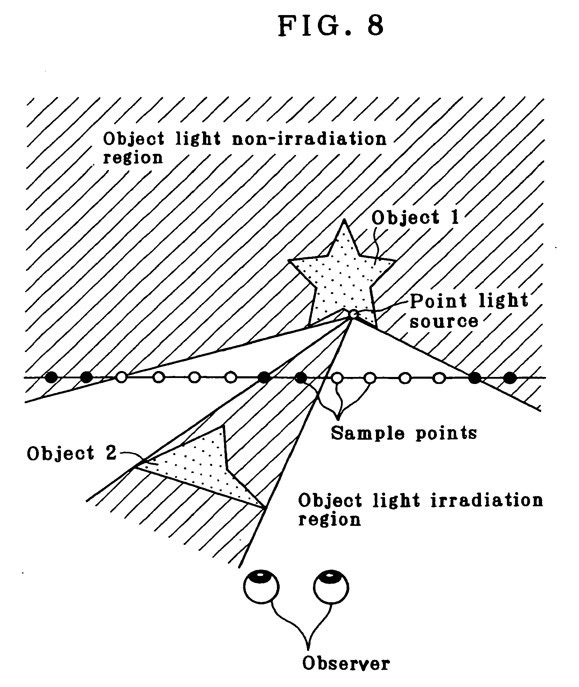

As shown in FIG. 8, for each point light source constituting the object 1, the region in which the point light source is hidden by objects 1, 2 (the hatched area in FIG. 8) is obtained. In the case of CGH which is produced according to the procedure shown in FIG. 7, since the objects 1, 2 are sliced by horizontal surfaces and have parallax only in the horizontal direction, the region in which the point light sources on object 1 are hidden by objects 1, 2 is obtained from the positional relations between points and lines on each slice surface. The hidden surface removal process is a process in which, when a sample point of the interference fringe distributing on CGH plane is included in the region in which the point light sources are hidden obtained in the above (solid point in FIG. 8), that point light source at that sample point is eliminated from the calculation of the intensities of the interference fringe. From the image of object 1 reconstructed from CGH processed as above, the reconstruction light is not diffracted to the hatched area in FIG. 8, and the region of the object 1 corresponding to those point light sources becomes invisible because the region becomes behind the image of object 2 when an observer drops his viewpoint on that region.

In addition, it is also proposed in the patent reference 2 that color can be expressed with a CGH, produced by the process in which object surface is replaced by a set of point light sources, by reproducing the CGH with white light.

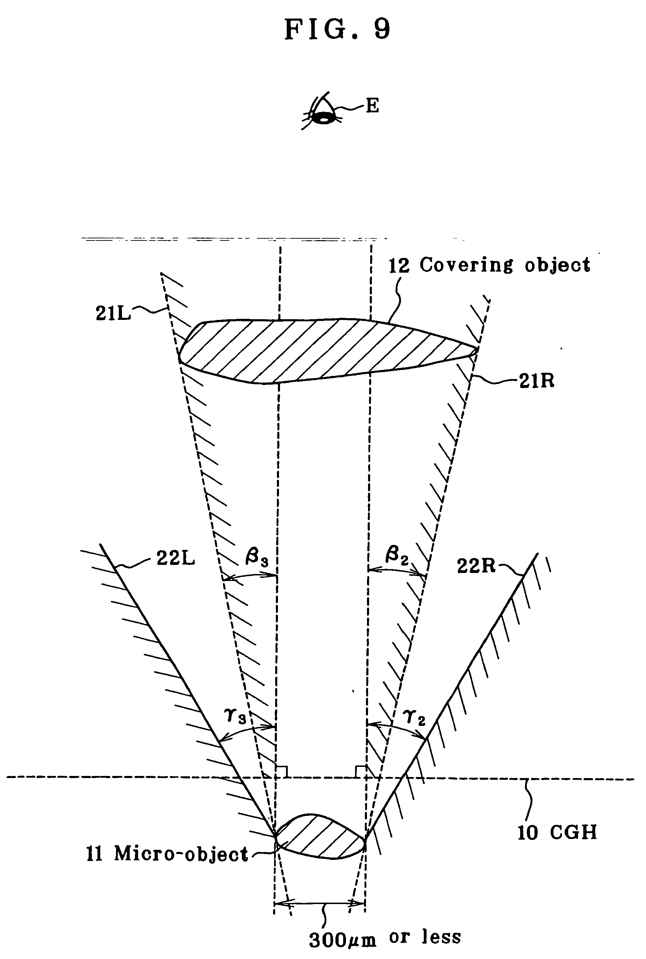

On the other hand, the inventor has proposed, in Japanese Patent Application No. 2001-365628, "hidden micro-letter" which is recorded in such a manner that a micro-letter providing verifying information is arranged behind a covering object having a size easily recognizable by naked eyes, and the verifying information is hidden by the covering object and is not observable from a predetermined direction, but is observable from the other direction which is different from the predetermined direction, so that the micro-letter is difficult to be detected by counterfeiters. A representative example will be described with reference to FIG. 9. As shown in FIG. 9, verifying information which is a micro-object 11 such as a letter or a figure having such a size as not easily to be recognized by naked eyes, specifically having the largest size not greater than 300 µm, is arranged behind a covering object 12 having a size larger than micro-object 11 and easily recognizable with naked eyes arranged in front of the micro-object (nearer to the observer relative to the micro-object) , at a position where micro-object 11 is covered by the covering object when viewed from the front, so that a viewer E can not observe the verifying information from the front (normal observing direction) , and this arrangement is recorded in a CGH 10. For this end, the hidden surface removal process described above is performed on the set of point light sources expressing the micro-object 11, and the recording is performed in such a manner that the reconstruction light from the micro-object 11 does not diffract to a region at least between the line 21L and the line 21R in FIG. 9. The line 21L is a line passing the left end of the micro-object 11 and the left end of the covering object 12, and the line 21R is a line passing the right end of the micro-object 11 and the right end of the covering object 12, the front direction being included between the line 21L and the line 21R. In addition, the line 22L is a line drawn from the left end of the micro-object 11 toward upper left indicating a boundary of a region to which the reconstruction light from the left end of the micro-object 11 does not diffract, and the line 22R is a line drawn from the right end of the micro-object 11 toward upper right indicating a boundary of a region to which the reconstruction light from the right end of the micro-object 11 does not diffract.

In relation to the above, the right side emission angle γ ₂ of the object light of micro-object 11 is set larger than the angle β₂ which is an angle between the line 21R connecting the right end of the micro-object 11 and the right end of the covering object 12 and the front direction, and the left side emission angle γ₃ of the object light of micro-object 11 is set larger than the angle β₃ which is an angle between the line 21L connecting the left end of the micro-object 11 and the left end of the covering object 12 and the front direction. Accordingly, as seen from FIG. 9, the angle range in which all or a part of the micro-object 11 is visible is γ₂ - β₂ + γ₃ - β₃, while the angle range in which the micro-object is covered is β₂ + β₃.

In this type of CGH, the presence of verifying information (micro-object 11) is difficult to be noticed because the recorded verifying information is too small to be recognized with naked eyes even under appropriate illumination. In addition, the presence of the verifying information is difficult to be noticed from the front direction which is the normal observation direction, even with the use of magnifying glass or other enlargement device, thus further enhancing the secrecy of verifying information and decreasing the danger of counterfeit.

In this type of CGH, the verification is performed by irradiating the hologram with appropriate illumination and observing it from a predetermined direction other than the front direction using magnifying glass or other enlargement device to reveal the verifying information (micro-object 11). The verifying information 11 can be confirmed as it disappears because it becomes behind the covering object 12 when the observation position is moved to the front where the observer's direction is the normal observation direction.

### [Patent reference 1]

Japanese patent No. 3,155,263

### [Patent reference 2]

Japanese unexamined patent publication 2000-214751

### [Non-patent reference 1]

"Image Labo" April 1997 (Vol. 8, No. 4) p. 34-37

### [Non-patent reference 2]

3D-Image Conference '99 Proceedings CD-ROM (June 30-July 1, 1999 at Kogakuin University Shinjuku Campus) "Image Type Binary CGH by EB Imaging (3) -The Enhancement of Three-Dimensional Effect by Hidden Surface removal/Shadowing"

### [Non-patent reference 3]

Research Society of Holographic Display (Optical Society of Japan, Japan Society of Applied Physics), The Third Hodic Conference Proceedings (November 15, 1995, at Nihon University Surugadai Campus, Building No. 1, Meeting Room No. 2) "The Speed Up of Two-Dimensional Image Sequence Generation for Holographic Stereogram"

"Computer-generated holograms for reconstructing multi 3-D images by space-division recording method" by T. Hamano and M. Kitamura, Proceedings of the SPIE col. 3956 (2000), pages 23-32, 0277-786X, is related with CGHs that are able to reconstruct different 3-D images in accordance with moving viewpoints. In an example, a rounded 3-D ring is shown and arranged around a logotype. It is further taught that the logotype as well as the rounded ring can be observed with an enhanced 3-D effect if using the process described therein.

### SUMMARY OF THE INVENTION

As described above, conventional verifying information such as a micro-letter (micropattern) is easily counterfeited and forgery is increasing.

The present invention is made in order to resolve such problems of the prior art, and it is the object of the present invention to provide a three-dimensional pattern using a hologram which can not be counterfeited by neither of color copying machine nor diffraction grating image forming device.

The three-dimensional pattern of the present invention which can achieve above described object is characterized by comprising a hologram composed of a three-dimensional aggregation of a large number of very small micro-letters, wherein said micro-letters are three-dimensionally aggregated to constitute a specific three-dimensional object so as to allow reconstruction of a three-dimensional image of the three-dimensional object.

In this connection, the three-dimensional pattern is recorded as a computer generated hologram. Such computer generated hologram may be recorded using a process in which the surface of the micro-letters is replaced with a set of point light sources or linear light sources or the holographic stereogram process.

It is preferable that the size of said each very small micro-letter is not greater than 300 µm.

Further, it is preferable that the three-dimensional aggregation of said very small micro-letters is recorded so that the aggregation is reconstructed to compose a specific three-dimensional object as a whole when viewed with naked eyes.

Further, the specific three-dimensional object may be a cylindrical object, a spherical object, a polyhedral object, a conical object, a helical object, a twister-like object.

Furthermore, the micro-letters three-dimensionally aggregated to form the specific three-dimensional object may be spirally arranged around a surface of the specific three-dimensional object.

Moreover, the micro-letters three-dimensionally aggregated to form the specific three-dimensional object may be arranged concentrically around a surface of the specific three-dimensional object or along outlines of pieces created by cutting the specific three-dimensional object.

Among said micro-letters three-dimensionally aggregated to form the specific three-dimensional object, as for the respective configurations, thick ones and thin ones may be mixed.

Further, the micro-letters positioned on the front side of specific three-dimensional object may be formed to have relatively large size.

Further, the micro-letters three-dimensionally aggregated to form the specific three-dimensional object may be recorded in such a manner that they are reconstructed in different colors individually or partially when taken as the aggregation.

In addition, the present invention includes documents on which the three-dimensional pattern as described above is provided.

The three-dimensional pattern of the present invention comprises a hologram which is composed of a three-dimensional aggregation of a large number of very small micro-letters and is recorded such that the micro-letters are three-dimensionally aggregated to constitute a specific three-dimensional object so as to allow the reconstruction of a three-dimensional image of the three-dimensional object. Though the three-dimensional object easily recognizable with naked eyes can appear when viewed as a whole, the respective micro-letters constituting the three-dimensional object are hardly recognized, thereby facilitating the verification with naked eyes with keeping the counterfeit deterrent effect. In addition, since the micro-letters are arranged just as being floating in the space, it is extremely difficult to prepare a model of such configuration. Therefore, such micro-letters are hardly counterfeited by means of an ordinary hologram using two-beam interference in which a model is prepared and photographed with laser beams. Since the other micro-letters located in front function as covering object of the micro-letters located inner side of the three-dimensional object, the existence of the hidden micro-letters is difficult to be noticed from normal observation direction even with the use of enlargement means such as magnifying glass, and the information is impossible to be duplicated with color copying machines and further impossible to be counterfeited with diffraction grating image forming devices, thereby significantly enhancing the counterfeit deterrent effect.

Still other objects and advantages of the invention will in part be obvious and will in part be apparent from the specification.

The invention accordingly comprises the features of construction, combinations of elements, and arrangement of parts which will be exemplified in the construction hereinafter set forth, and the scope of the invention will be indicated in the claims.

### BRIEF DESCRIPTION OF THE DRAWINGS

FIG. 1 is a perspective view showing a cylindrical object as one example of three-dimensional images to be used for the three-dimensional pattern according to the present invention;
FIG. 2 is a perspective view showing a spherical object as one example of three-dimensional images to be used for the three-dimensional pattern according to the present invention;
FIG. 3 is a perspective view showing a polyhedral object as one example of three-dimensional images to be used for the three-dimensional pattern according to the present invention;
FIG. 4 is a perspective view showing a conical object as one example of three-dimensional images to be used for the three-dimensional pattern according to the present invention;
FIG. 5 is a perspective view showing a coil spring-like object as one example of three-dimensional images to be used for the three-dimensional pattern according to the present invention;
FIG. 6 is a perspective view showing a twister-like object as one example of three-dimensional images to be used for the three-dimensional pattern according to the present invention;
FIG. 7 is a flow chart schematically showing the procedure of producing CGH according to the process in which object surface is replaced with a set of point light sources or linear light sources;
FIG. 8 is an illustration for explaining the hidden surface removal process of a CGH recording; and
FIG. 9 is an illustration for explaining a micro-object, a covering object, and the range of the object light of a CGH comprising verifying information according to the prior application.

### DESCRIPTION OF THE PREFERRED EMBODIMENTS

Hereinafter, the basic principle and embodiments of the three-dimensional pattern according to the present invention will be described.

Because micro-letters or geometric micro-figures are so small that constructions of characters or figures are difficultly observed by naked eyes, enhanced counterfeit deterrent effect can be obtained, but there is a problem that verification by naked eyes is also difficult. To solve this problem, according to the present invention, a large number of micro-letters are three-dimensionally arranged spatially in such a manner that these micro-letters compose a three-dimensional object which is easily recognized by naked eyes when taken as a whole, thereby facilitating the verification with naked eyes with keeping the counterfeit deterrent effect of micro-letters.

In addition, since the micro-letters are arranged just as being floating in the space, it is extremely difficult to prepare a model of such configuration. Therefore, such micro-letters are hardly counterfeited by means of conventional-type hologram in which a model is prepared and photographed with laser beams.

Specifically, for example, at step ST1 in FIG. 7 an original image of three-dimensional micro-letters are precisely created by means of a 3D-CAD for computer graphics in such a manner that these three-dimensional micro-letters compose a three-dimensional structure (three-dimensional object) easily recognizable with naked eyes when taken as a whole. Then at step ST2, the space arrangements of the three-dimensional structure, CGH plane, and reference light are defined. Then at step ST3, the three-dimensional micro-letters are replaced with a set of point light sources or linear light sources, and the hidden surface removal process shown in FIG. 8 is performed. At step ST4, on the basis of these space arrangements, interference fringe data is obtained by calculation of intensities of interference fringe between the light coming from each point light source or linear light source constructing the micro-letters as a three-dimensional structure, and a reference light. Then at step ST5, the obtained interference fringe data are quantized. After that, at step ST6, the data are converted into rectangular data for EB imaging. Then at step ST7, the data is recorded on a medium by an EB imaging device. In this manner, the three-dimensional pattern of the present invention created utilizing the process in which object surface is replaced with a set of point light sources or linear light sources is produced.

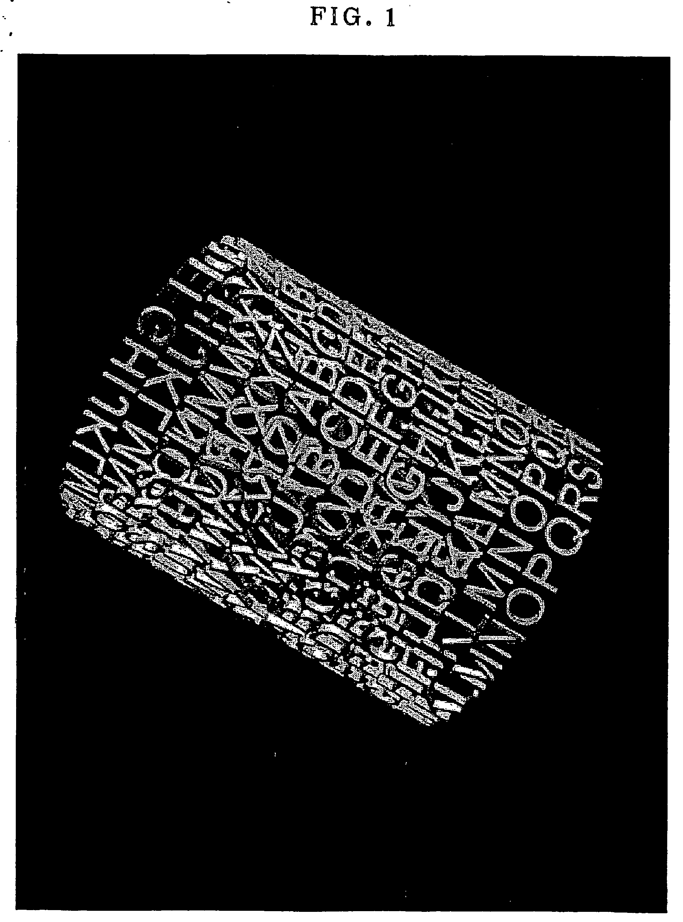

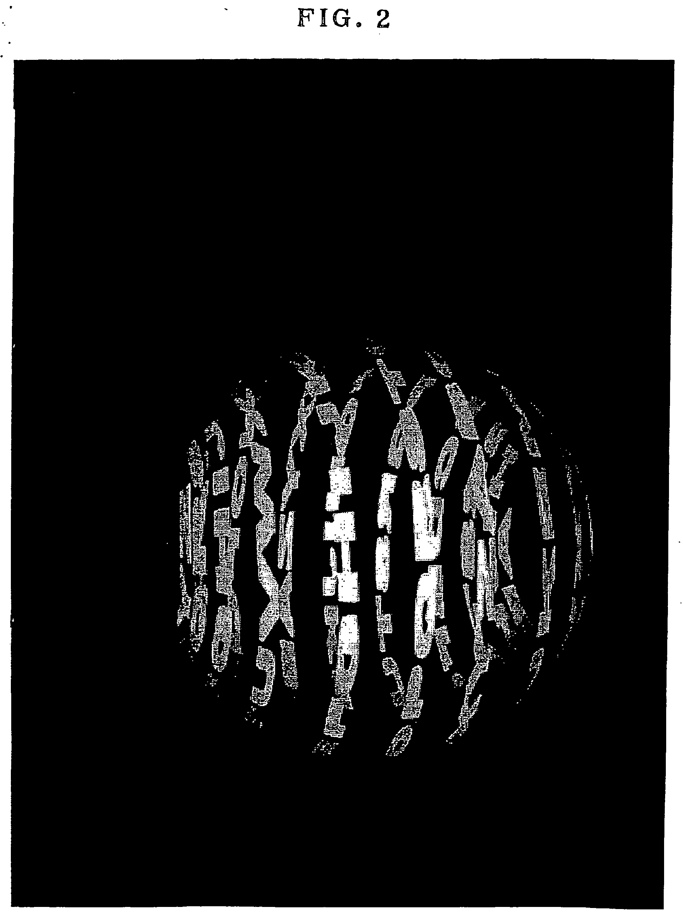

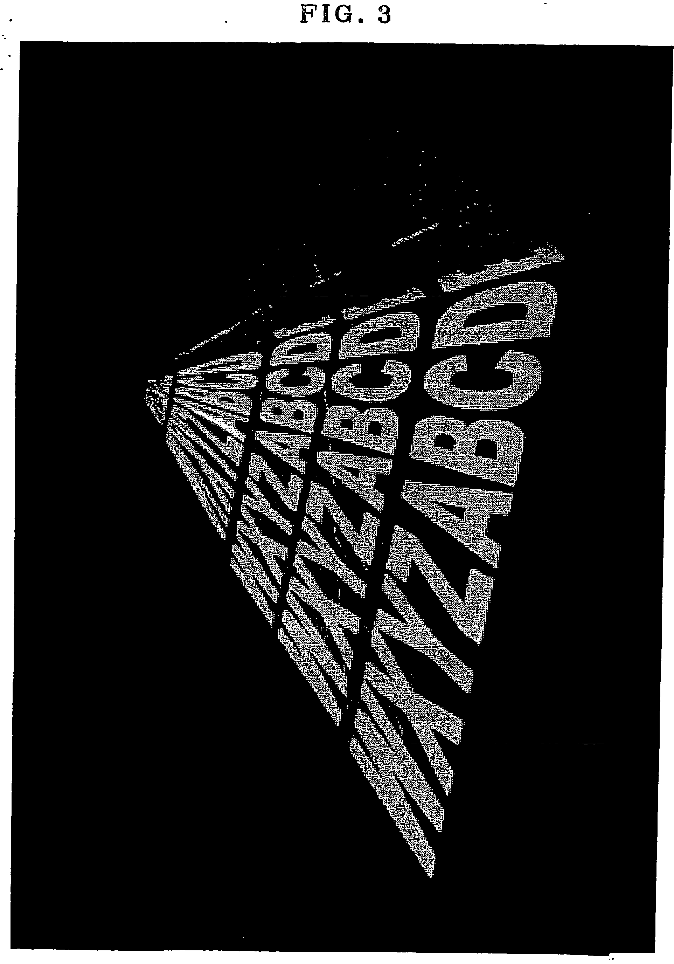

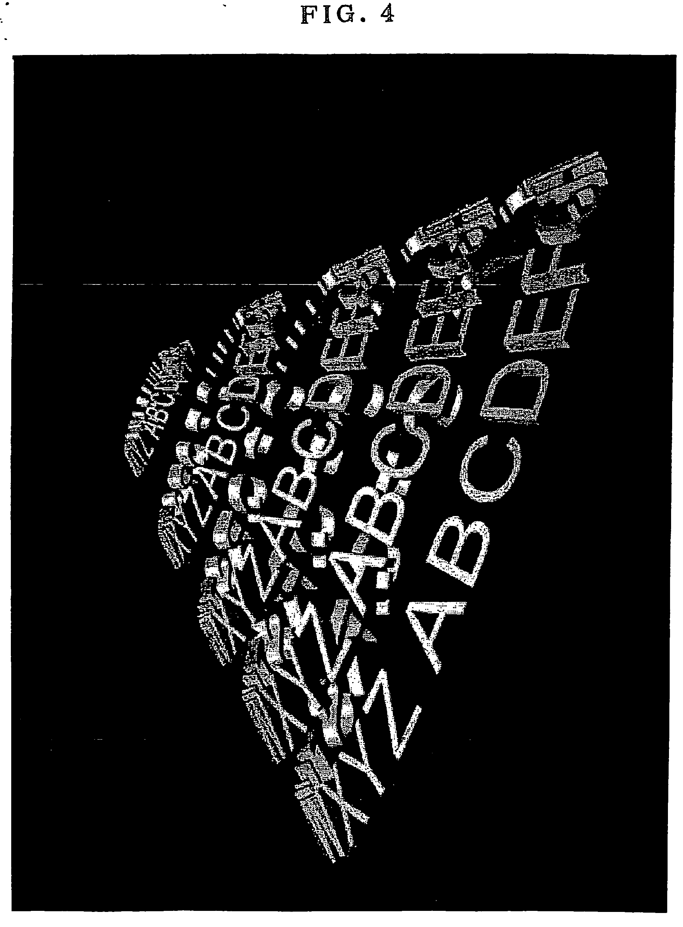

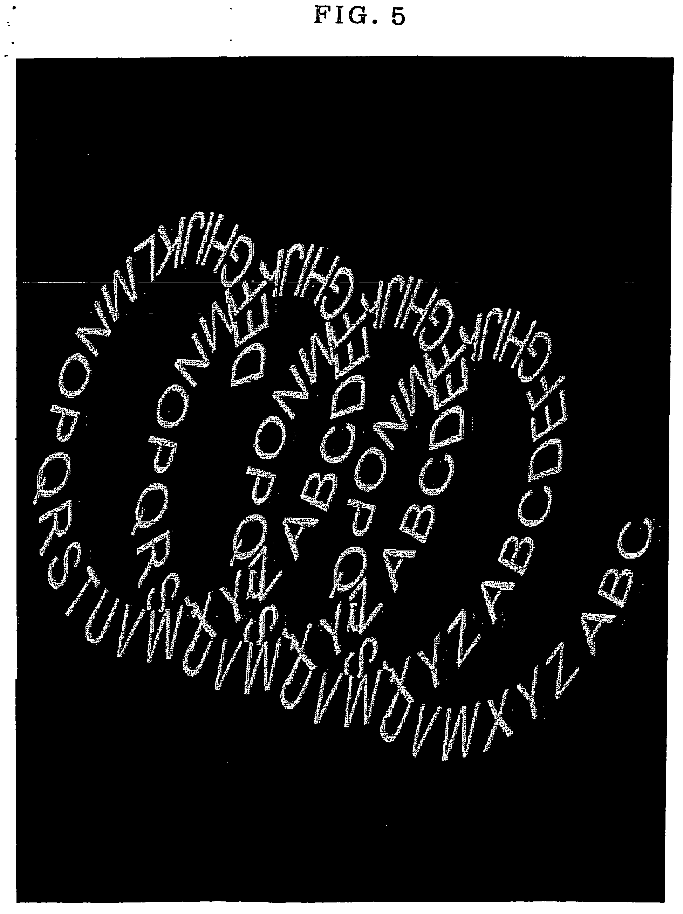

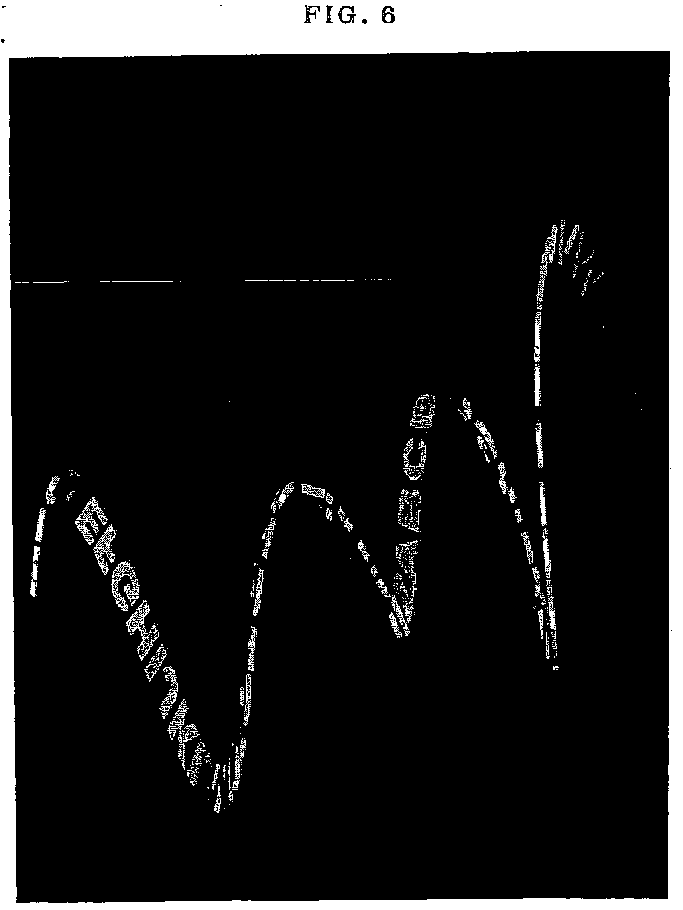

Specific examples of the three-dimensional objects with an arrangement in which a large number of micro-letters are three-dimensionally arranged spatially in such a manner that these micro-letters compose a three-dimensional image which is easily recognized by naked eyes when taken as a whole, are a cylindrical object as shown in FIG. 1, a spherical object as shown in FIG. 2, a polyhedral object (triangular pyramid in the illustrated case) as shown in FIG. 3, a conical object (concentric object) as shown in FIG. 4, a coil spring-like object (spiral object) as shown in FIG. 5, and a twister-like object (with a billowing axis) as shown in FIG. 6.

In case of a cylindrical object as shown in FIG. 1, very small micro-letters of capital letters from A to Z are arranged serially in alphabetical order along outlines of pieces created by cutting a cylindrical object without the top and bottom, in such a manner as to create a peripheral surface of a cylindrical object as a whole.

In case of a spherical object as shown in FIG. 2, very small micro-letters of capital letters from A to Z are arranged, relatively roughly in this case, serially in alphabetical order along outlines of pieces created by cutting a sphere, in such a manner as to create a peripheral surface of a sphere as a whole.

In case of a polyhedral object (tetrahedron) as shown in FIG. 3, very small micro-letters of capital letters from A to Z are arranged serially in alphabetical order along outlines of pieces created by cutting a tetrahedron without its bottom, in such a manner as to create a tetrahedron as a whole. In this case, the nearer to the top of the triangular pyramid, the smaller the size of the micro-letter is.

Also in case of a conical object (concentric object) as shown in FIG. 4, very small micro-letters of capital letters from A to Z are arranged serially in alphabetical order along outlines of pieces created by cutting a circular cone without its bottom, in such a manner as to create a circular cone as a whole. Also in this case, the nearer to the top of the triangular pyramid, the smaller the size of the micro-letter is.

In case of a spiral object as shown in FIG. 5, very small micro-letters of capital letters from A to Z are arranged serially and circularly in alphabetical order along a helical line in such a manner as to create a coil spring-like object as a whole.

In case of a twister-like object as shown in FIG. 6, very small micro-letters of capital letters from A to Z are arranged serially and circularly in alphabetical order along a twister-like line in such a manner as to create a twister-like object as a whole.

In case of any other object as the three-dimensional object than the shapes as shown in FIG. 1 through FIG. 6, very small micro-letters of capital letters from A to Z are arranged serially in such a manner as to create a three-dimensional object easily recognizable with naked eyes. It should be noted that, instead of the micro-letters, geometric micro-figures may be used alone (comparative example) or in combination with micro-letters according to the concept of the present invention.

When micro-letters are serially arranged, the case of arranging micro-letters concentrically or along outlines of pieces created by cutting a three-dimensional object is better for imparting the three-dimensional effect than the case of spirally arranging micro-letters around a surface of a three-dimensional object just like the cases of FIG. 5 and FIG. 6.

When among the micro-letters used for constituting a three-dimensional object, the respective configurations are different, i.e. thick ones (FIG. 4, FIG. 5) and thin ones (FIG. 2, FIG. 3) are mixed, it is extremely difficult to prepare a model of such the three-dimensional object. Therefore, such micro-letters are hardly counterfeited by means of conventional-type hologram in which a model is prepared and photographed with laser beams.

It is preferable to arrange the micro-letters in such a manner that the nearer to the observer the micro-letter is positioned, the larger the size of the micro-letter or geometric micro-figure is. In this arrangement, the sense of depth can be enhanced by perspective effect.

The three-dimensional object easily recognizable with naked eyes is not limited to the examples shown in FIG. 1 through FIG. 6 and may be any of geometric three-dimensional objects. For example, "moiré (wave pattern)" may be employed as the three-dimensional object.

In such constitution, as described with reference to FIG. 9, these micro-letters function as verifying information and other micro-letters or geometric micro-figures, which are located in front of the micro-letters, function as covering object so that the micro-letters are hidden behind the micro-letters or geometric micro-figures and can not be fully observed in an observation from a predetermined direction, for example from the front direction. However, they may be fully observable from the other direction than the predetermined direction, for example from an oblique direction. In this manner, a three-dimensional pattern which is more difficult to be counterfeited is achieved, further improving the security.

The micro-letters constituting a three-dimensional object easily recognizable with naked eyes are effective as counterfeit deterrent three-dimensional pattern when they are recorded with a size difficult to be recognized by naked eyes. Specifically, it is preferable that the size of each micro-letter is not greater than 300 µm.

It is preferable that the micro-letters are recognized with naked eyes as a whole as one three-dimensional object.

Further, it is also preferable that the micro-letters constituting a three-dimensional object are recorded in such a manner that they are reconstructed in different colors. As one of the techniques to achieve this, the process proposed in the patent reference 2 can be employed.

Further, the hologram constituting the three-dimensional pattern of the present invention can be produced by preparing a model of a three-dimensional object as shown in FIG. 1 through FIG. 6 and photographing the model by an ordinary hologram process using two-beam interference. However, since the sizes of the micro-letters and geometric micro-figures are not greater than 300 µm, the computer generated hologram process as described above is preferable because the ordinary hologram photographing process is difficult to perform for this size.

Further, the three-dimensional pattern according to the present invention can be constituted as transfer film or label which can be transferred or attached to documents such as securities and banknotes, such documents being included in the range of the present invention.

While the present invention has been described in the above in the context of principle and embodiments thereof, the invention is not limited to these embodiments and various modifications may be made.

As apparent from the above description, according to the three-dimensional pattern of the present invention, a hologram is composed of a three-dimensional aggregation of a large number of very small micro-letters and is recorded such that the micro-letters are three-dimensionally aggregated to constitute a specific three-dimensional object so as to allow the reconstruction of a three-dimensional image of the three-dimensional object. Though the three-dimensional object easily recognizable with naked eyes can appear when viewed as a whole, the respective micro-letters constituting the three-dimensional object are hardly recognized, thereby facilitating the verification with naked eyes with keeping the counterfeit deterrent effect. In addition, since the micro-letters are arranged just as being floating in the space, it is extremely difficult to prepare a model of such configuration. Therefore, such micro-letters are hardly counterfeited by means of conventional-type hologram using two-beam interference in which a model is prepared and photographed with laser beams. Since the other micro-letters or geometric micro-figures located in front as covering object of the micro-letters located inner side of the three-dimensional object function, the existence of the hidden micro-letters is difficult to be noticed from normal observation direction even with the use of enlargement means such as magnifying glass, and the information is impossible to be duplicated with color copying machines and further impossible to be counterfeited with diffraction grating image forming devices, thereby significantly enhancing the counterfeit deterrent effect.

## Claims

1. Method for manufacturing a three-dimensional pattern, comprising:
three-dimensionally aggregating micro-letters to constitute a specific three-dimensional object so as to allow reconstruction of a three-dimensional image of the three-dimensional object, and
recording said three-dimensional pattern as a computer-generated hologram.

2. The method of claim 1, wherein said three-dimensional pattern is computer-generated using a process in which a surface of the micro-letters is replaced with a set of point light sources or linear light sources.

3. The method of claim 1, wherein said three-dimensional pattern is recorded using the holographic stereogram process.

4. The method of claim 1, 2 or 3, wherein the size of said each micro-letter is not greater than 300 µm.

5. The method as claimed in any one of claims 1 through 4, wherein the three-dimensional aggregation of said micro-letters is recorded so that the aggregation is reconstructed to compose a specific three-dimensional object as a whole when viewed with naked eyes.

6. The method as claimed in any one of claims 1 through 5, wherein said specific three-dimensional object is a cylindrical object, a spherical object, a polyhedral object, a conical object, a helical object, or a twister-like object.

7. The method as claimed in any one of claims 1 through 6, wherein said micro-letters three-dimensionally aggregated to form the specific three-dimensional object are coil spring-like arranged around a surface of the specific three-dimensional object.

8. The method as claimed in any one of claims 1 through 6, wherein said micro-letters three-dimensionally aggregated to form the specific three-dimensional object are arranged concentrically around a surface of the specific three-dimensional object or along outlines of pieces created by cutting the specific three-dimensional object.

9. The method as claimed in any one of claims 1 through 8, wherein some of said micro-letters three-dimensionally aggregated to form the specific three-dimensional object, as for the respective configurations, are thicker than the others.

10. The method as claimed in any one of claims 1 through 9, wherein the micro-letters positioned on the front side of the specific three-dimensional object are of larger size than the other micro-letters.

11. The method as claimed in any one of claims 1 through 10, wherein said micro-letters three-dimensionally aggregated to form the specific three-dimensional object are recorded in such a manner that they are reconstructed in different colors individually or partially when taken as the aggregation.

12. A document being provided with a three-dimensional pattern obtained from the method as claimed in any one of claims 1 through 11.

## Patentansprüche

1. Verfahren zur Herstellung eines dreidimensionalen Musters, das aufweist:
dreidimensionales Aggregieren von Mikro-Buchstaben, um ein spezifisches dreidimensionales Objekt zu bilden, um so die Rekonstruktion eines dreidimensionalen Bilds des dreidimensionalen Objekts zu ermöglichen, und
Aufzeichnen des dreidimensionalen Musters als computergeneriertes Hologramm.

2. Verfahren nach Anspruch 1, wobei das dreidimensionale Muster mit Hilfe eines Verfahrensablaufs computergeneriert wird, in dem eine Oberfläche der Mikro-Buchstaben durch einen Satz von Punktlichtquellen oder Linearlichtquellen ersetzt wird.

3. Verfahren nach Anspruch 1, wobei das dreidimensionale Muster mit Hilfe des holografischen Stereogramm-Verfahrensablaufs aufgezeichnet wird.

4. Verfahren nach Anspruch 1, 2 oder 3, wobei die Größe jedes Mikro-Buchstabens höchstens 300 µm beträgt.

5. Verfahren nach einem der Ansprüche 1 bis 4, wobei die dreidimensionale Aggregation der Mikro-Buchstaben so aufgezeichnet wird, dass die Aggregation rekonstruiert wird, um ein spezifisches dreidimensionales Objekt als Ganzes bei Betrachtung mit bloßem Auge zusammenzusetzen.

6. Verfahren nach einem der Ansprüche 1 bis 5, wobei das spezifische dreidimensionale Objekt ein zylinderförmiges Objekt, ein kugelförmiges Objekt, ein vielflächiges Objekt, ein kegelförmiges Objekt, ein spiralförmiges Objekt oder ein twisterartiges Objekt ist.

7. Verfahren nach einem der Ansprüche 1 bis 6, wobei die Mikro-Buchstaben, die dreidimensional aggregiert werden, um das spezifische dreidimensionale Objekt zu bilden, um eine Oberfläche des spezifischen dreidimensionalen Objekts schraubenfederartig angeordnet werden.

8. Verfahren nach einem der Ansprüche 1 bis 6, wobei die Mikro-Buchstaben, die dreidimensional aggregiert werden, um das spezifische dreidimensionale Objekt zu bilden, um eine Oberfläche des spezifischen dreidimensionalen Objekts oder an Konturen von Stücken entlang angeordnet werden, die durch Schneiden des spezifischen dreidimensionalen Objekts erzeugt werden.

9. Verfahren nach einem der Ansprüche 1 bis 8, wobei einige der Mikro-Buchstaben, die dreidimensional aggregiert werden, um das spezifische dreidimensionale Objekt wie für die jeweiligen Konfigurationen zu bilden, dicker als die anderen sind.

10. Verfahren nach einem der Ansprüche 1 bis 9, wobei die Mikro-Buchstaben, die auf der Vorderseite des spezifischen dreidimensionalen Objekts positioniert sind, eine größere Größe als die anderen Mikro-Buchstaben haben.

11. Verfahren nach einem der Ansprüche 1 bis 10, wobei die Mikro-Buchstaben, die dreidimensional aggregiert werden, um das spezifische dreidimensionale Objekt zu bilden, so aufgezeichnet werden, dass sie bei Betrachtung als Aggregation individuell oder partiell in unterschiedlichen Farben rekonstruiert werden.

12. Dokument, das mit einem dreidimensionalen Muster versehen ist, das mit dem Verfahren nach einem der Ansprüche 1 bis 11 erhalten wird.

## Revendications

1. Procédé de fabrication d'un motif tridimensionnel, comprenant les étapes suivantes :
réunir tridimensionnellement des micro-lettres pour constituer un objet tridimensionnel spécifique afin de permettre une reconstruction d'une image tridimensionnelle de l'objet tridimensionnel, et
enregistrer ledit motif tridimensionnel sous la forme d'un hologramme généré par ordinateur.

2. Procédé selon la revendication 1, dans lequel ledit motif tridimensionnel est généré par ordinateur en utilisant un procédé selon lequel une surface des micro-lettres est remplacée par un ensemble de sources de lumière ponctuelles ou de sources de lumière linéaires.

3. Procédé selon la revendication 1, dans lequel ledit motif tridimensionnel est enregistré en utilisant le procédé de stéréogramme holographique.

4. Procédé selon la revendication 1, 2 ou 3, dans lequel la taille de chacune desdites micro-lettres n'est pas supérieure à 300 µm.

5. Procédé selon l'une quelconque des revendications 1 à 4, dans lequel la réunion tridimensionnelle desdites micro-lettres est enregistrée de sorte que la réunion soit reconstruite pour composer un objet tridimensionnel spécifique dans son ensemble lorsqu'il est vu à l'oeil nu.

6. Procédé selon l'une quelconque des revendications 1 à 5, dans lequel ledit objet tridimensionnel spécifique est un objet cylindrique, un objet sphérique, un objet polyhédrique, un objet conique, un objet hélicoïdal, ou un objet en forme de torsade.

7. Procédé selon l'une quelconque des revendications 1 à 6, dans lequel lesdites micro-lettres réunies tridimensionnellement pour former l'objet tridimensionnel spécifique sont disposées en forme de ressort hélicoïdal autour d'une surface de l'objet tridimensionnel spécifique.

8. Procédé selon l'une quelconque des revendications 1 à 6, dans lequel lesdites micro-lettres réunies tridimensionnellement pour former l'objet tridimensionnel spécifique sont disposées de manière concentrique autour d'une surface de l'objet tridimensionnel spécifique ou le long de contours de morceaux créés en découpant l'objet tridimensionnel spécifique.

9. Procédé selon l'une quelconque des revendications 1 à 8, dans lequel certaines desdites micro-lettres réunies tridimensionnellement pour former l'objet tridimensionnel spécifique, pour les configurations respectives, sont plus épaisses que les autres.

10. Procédé selon l'une quelconque des revendications 1 à 9, dans lequel les micro-lettres positionnées sur le côté avant de l'objet tridimensionnel spécifique sont plus grandes que les autres micro-lettres.

11. Procédé selon l'une quelconque des revendications 1 à 10, dans lequel lesdites micro-lettres réunies tridimensionnellement pour former l'objet tridimensionnel spécifique sont enregistrées de telle manière qu'elles sont reconstruites en différentes couleurs individuellement ou partiellement lorsqu'elles sont considérées en groupe.

12. Document muni d'un motif tridimensionnel obtenu à partir du procédé selon l'une quelconque des revendications 1 à 11.
